(19) Europäisches Patentamt

European Patent Office

Office européen des brevets

(11) **EP 0 716 119 A1**

(12) **DEMANDE DE BREVET EUROPEEN**

(43) Date de publication:
12.06.1996 Bulletin 1996/24

(51) Int Cl.⁶: **C08K 3/34**

(21) Numéro de dépôt: 95203257.1

(22) Date de dépôt: 27.11.1995

(84) Etats contractants désignés:
AT BE DE DK ES FR GB IT NL SE

(30) Priorité: 06.12.1994 BE 9401111

(71) Demandeur: SOLVAY (Société Anonyme)
B-1050 Bruxelles (BE)

(72) Inventeurs:
• Gilliard, Pierre
B-1120 Bruxelles (BE)

• Dehennau, Claude
B-1410 Waterloo (BE)

(74) Mandataire: Dufrasne, Eugène et al
Solvay S.A.,
Département Propriété Industrielle,
310, rue de Ransbeek
1120 Bruxelles (BE)

(54) **Tube, plaque ou article biorienté à base de polyoléfines chargées**

(57) Tube biorienté essentiellement constitué d'une polyoléfine et d'au moins une matière de charge sous forme de plaquettes, présentant une rigidité en traction remarquable dans la direction d'orientation dominante.

Plaque biorientée obtenue à partir d'un tel tube biorienté et article biorienté obtenu à partir d'un tel tube biorienté ou d'une telle plaque biorientée.

## Description

La présente invention concerne un tube, une plaque ou un article biorienté, essentiellement constitué d'une polyoléfine et d'au moins une matière de charge sous forme de plaquettes, le tube, la plaque ou l'article biorienté présentant des propriétés mécaniques remarquables.

Les tubes, plaques et autres articles biorientés présentent un intérêt croissant, notamment en vue de la réalisation de canalisations de transport et de distribution de fluides sous pression ou de plaques soumises à d'importantes sollicitations, au vu notamment du module de traction élevé qu'ils peuvent offrir.

Il est bien connu de réaliser des tubes biorientés à partir de tubes essentiellement constitués d'une polyoléfine produits par extrusion. A cet effet, la biorientation de tels tubes est généralement obtenue, ainsi qu'il est proposé par A. K. TARAIYA et I. M. WARD (Plastics, Rubber and Composites Processing and Applications 1991, Vol. 15, n° 1, pages 5-11) en conditionnant de tels tubes à une température inférieure à la température de fusion cristalline de leur matériau constitutif et en soumettant ceux-ci, dans cet état, à un étirage biaxial par tirage au travers d'une filière équipée d'un mandrin interne divergent.

Or, lors de l'orientation de polyoléfine par la technique d'étirage à température inférieure au point de fusion cristalline, il apparaît (ainsi qu'il est montré par Satoyuki Minami : Polymer prep. 1985, 26, p. 245) que pour obtenir un produit final présentant des modules de traction de l'ordre de 3000 MPa dans chaque sens il faut soumettre ces polyoléfines à un taux d'étirage de l'ordre de 6 fois dans chaque sens.

Pour augmenter le module de traction d'un produit dans la direction dominante de l'orientation, il est alors nécessaire de l'étirer de manière plus importante.

Néanmoins, l'étirement d'un produit est limité par nombre de contraintes techniques telles que notamment la faible valeur de l'épaisseur finale d'un produit très étiré ou l'épaisseur initiale très élevée du produit et les difficultés notamment de chauffage qu'elle implique.

Pour améliorer le module de traction d'un produit, il est également connu de mettre en oeuvre une composition à laquelle est incorporée une matière de charge possédant un module de traction élevé.

Néanmoins, cette solution possède également ses limites, car l'incorporation d'une quantité importante d'une telle charge affecte sensiblement les caractéristiques mécaniques, en particulier la résistance au choc, du produit qui sera fabriqué.

La demanderesse est cependant parvenue à réaliser un produit biorienté, essentiellement constitué d'une polyoléfine et d'au moins une matière de charge, possédant des propriétés mécaniques, en particulier un module de traction, surprenantes.

La présente invention concerne, dès lors, un tube biorienté, essentiellement constitué d'une polyoléfine et d'au moins une matière de charge sous forme de plaquettes, dans lequel le rapport

$$R = \frac{E \text{ composition} - E \text{ polyoléfine. } (1\text{-}\% \text{ volume charge})}{E \text{ charge. } \% \text{ volume charge}}$$

est au moins égal à 0,1,

E étant le module de traction mesuré selon la norme ISO R 527 à 23 °C. Dans l'expression de R, E composition est le module de traction, dans la direction d'orientation dominante, de la composition orientée et mise en oeuvre, essentiellement constituée de polyoléfine et d'au moins une matière de charge sous forme de plaquettes, E polyoléfine est le module de traction, dans la direction d'orientation dominante, de la polyoléfine orientée et mise en oeuvre de manière analogue en l'absence de matière de charge. Dans la même expression, E charge est le module de traction, dans le plan des plaquettes, de la matière de charge.

R peut être qualifié de facteur de réduction, illustrant notamment la qualité d'homogénéité de la composition essentiellement constituée de polyoléfine et de charge et la qualité de la reprise des contraintes en traction par cette composition telle que mise en oeuvre. Ce facteur est extrait de la relation

E composition = F charge. % volume charge.R + E polyoléfine.(1-% volume charge)

telle que suggérée dans le cas de compositions renforcées au moyen de charges planes discontinues par G.E. PADAWER et N. BEECHER, Polymer Engineering and Science, 5/1970, vol.10, n° 3, 188. Le facteur R reflète ainsi le module de traction de la composition mise en oeuvre et donc du tube biorienté.

De préférence, le facteur R est d'au moins 0,125.

La composition telle que mise en oeuvre peut comprendre une ou plusieurs matières de charge sous forme de plaquettes.

Par matière de charge sous forme de plaquettes, on entend désigner une matière de charge sous forme d'éléments essentiellement plans, présentant une surface essentiellement plane de taille importante par rapport à leur épaisseur.

La matière de charge est généralement choisie pour son module en traction élevé. Avantageusement, le module de traction de la matière de charge est d'au moins 100 GPa dans le plan des plaquettes.

Pour favoriser notamment l'homogénéité de la composition mise en oeuvre, la matière de charge est avantageusement constituée de plaquettes de faibles dimensions. De manière intéressante, la matière de charge est d'une granulométrie telle qu'elle passe entièrement au travers d'un tamis d'une maille de 200 μm et qu'au moins 20 % en poids de cette matière traverse un tamis d'une maille de 50 μm.

On notera que pour établir la correspondance entre les pourcentages en poids et les pourcentages en volume de matière de charge, on utilise la densité apparente de la matière de charge, calculée à partir de la densité de la composition et des rapports en poids des composants.

La matière de charge peut être choisie par l'homme du métier parmi celles connues, de caractéristiques telles que susmentionnées. De manière préférée, la matière de charge sous forme de plaquettes est choisie parmi le talc et le mica.

Les proportions respectives de polyoléfine et de matière de charge peuvent être adaptées au type de produit et à l'application qui devra en être faite. En particulier, la matière de charge sous forme de plaquettes est présente à raison de 1 à 80 % en poids par rapport au poids total de composition mise en oeuvre. La proportion de matière de charge est notamment limitée en vue de ne pas affecter sensiblement les conditions de mise en oeuvre de la composition, en particulier son extrudabilité. De préférence, la proportion de matière de charge ne dépasse pas 40 % en poids par rapport au poids total de composition mise en oeuvre. De manière avantageuse, la proportion de matière de charge est d'au moins 10 % en poids par rapport au poids total de composition mise en oeuvre.

Par polyoléfine, on entend désigner un ou plusieurs polymères dérivés d'une oléfine. En particulier, la polyoléfine est un polymère dérivé de l'éthylène ou du propylène. Par polymère, on entend désigner tant un homopolymère qu'un copolymère. D'excellents résultats ont été obtenus à partir d'un homopolymère.

Il est également préférable de retenir une polyoléfine très visqueuse. A cet effet, on préfère choisir une polyoléfine ayant un indice de fluidité sous 21,6 kg inférieur à 10 selon la norme ASTM D 1238 (1990) (g/10 min).

Par ailleurs, il est avantageux que la polyoléfine présente une distribution de poids moléculaires telle que le rapport entre son poids moléculaire moyen en poids et son poids moléculaire moyen en nombre soit au moins égal à 10.

Le tube biorienté conforme à l'invention, peut, après sa production, être découpé longitudinalement et être ouvert et aplani pour donner une plaque biorientée. La présente invention concerne dès lors également une plaque biorientée obtenue à partir d'un tube biorienté tel que décrit ci-dessus. Une telle plaque biorientée peut être directement exploitée, au vu notamment de ses excellentes caractéristiques mécaniques.

Un tube biorienté ou une plaque biorientée tels que décrits ci-dessus peut encore être mis en forme par des procédés classiques de traitement à froid, tels que notamment un emboutissage, pour donner un article biorienté. La présente invention concerne dès lors également un article biorienté obtenu à partir d'un tube biorienté ou d'une plaque biorientée tels que décrits ci-dessus.

Pour produire un tube biorienté essentiellement constitué d'une polyoléfine et d'au moins une matière de charge sous forme de plaquettes, la demanderesse utilise avantageusement un procédé original d'extrusion directe et en continu de structures tubulaires biorientées qui comporte les particularités suivantes :

- on mélange préalablement, ou au plus tard dans l'extrudeuse, la polyoléfine et la matière de charge sous forme de plaquettes qui constituent essentiellement la composition à mettre en oeuvre;
- on met en oeuvre, par extrusion, la composition;
- durant son extrusion, on soumet ladite composition à un étirage biaxial sous un gradient de vitesse sensiblement constant dans le sens de l'écoulement par passage au travers d'une filière annulaire divergente de profil hyperbolique, la composition fondue pénétrant dans ladite filière étant préalablement conditionnée thermiquement à une température supérieure à la température de fusion de la polyoléfine mais inférieure à sa température de cristallisation sous l'étirage biaxial induit par ladite filière, les températures de fusion et de cristallisation étant déterminées pour la valeur de pression régnant à l'entrée de la filière annulaire divergente,
- on soumet ensuite la structure biorientée ainsi produite à une réfrigération rapide pour amener sa température à une température inférieure au point de cristallisation à pression atmosphérique de la polyoléfine, cette réfrigération étant réalisée, en l'absence de déformations, par passage de la structure au travers d'une section de filière droite annulaire subséquente de manière à parfaire la cristallisation induite durant l'étirage biaxial.

Ce procédé est particulièrement adapté à la production d'un tube biorienté tel que décrit ci-dessus, essentiellement constitué d'une polyoléfine et d'au moins une matière de charge sous forme de plaquettes, dans lequel le rapport

$$R = \frac{E \text{ composition - E polyoléfine.} (1\text{-}\%\text{ volume charge})}{E \text{ charge. } \%\text{ volume charge}}$$

est au moins égal à 0,1, E étant le module de traction mesuré selon la norme ISO R 527 à 23 °C.

Par ailleurs, il est également avantageux de fixer dans le procédé la température de la filière annulaire divergente à une valeur supérieure de 1 à 5 °C à celle de la composition pénétrant dans celle-ci.

Enfin, pour éviter toute tendance au blocage de la structure extrudée, il peut se révéler avantageux dans le procédé de prévoir une lubrification des parois de la filière. Cette lubrification peut être obtenue en utilisant une filière dont les parois sont rendues glissantes par un traitement préalable adéquat tel qu'un revêtement de résine fluorée TEFLON® et/ou en injectant en divers endroits de la filière un lubrifiant tel qu'une huile de silicone. Exemples.

La présente invention est encore illustrée, de manière non limitative, par les exemples qui suivent. Les exemples 1R, 3R et 4R, non conformes à l'invention, sont donnés à titre de comparaison.

Exemple 1R

On a alimenté une extrudeuse équipée d'une filière telle que décrite ci-avant par un polyéthylène de haute densité ayant les caractéristiques suivantes :

HLMI (21,6 Kg) = 2,5
Module de traction isotrope : 1100 MPa
Température de fusion à 200 bars = 138 °C
Température de début de cristallisation : 155 °C (sous un étirage à gradient de vitesse uniaxial de O,1 $s^{-1}$ et une pression de 200 bars)

Les conditions d'extrusion ont été réglées de façon telle que la température de la polyoléfine pénétrant dans la filière s'élève à 151 °C et on a thermostatisé la filière annulaire divergente à une température de 154 °C.

La géométrie de la filière annulaire divergente, préalablement revêtue de résine fluorée TEFLON, a été choisie de façon telle que le polymère soit étiré sous un gradient de vitesse constant (moyenné sur la section de passage) de 0,1 $s^{-1}$ dans le sens longitudinal, que les taux d'étirage longitudinaux et transversaux soient respectivement de 4 et de 2 et que la structure tubulaire quittant cette filière présente un diamètre externe de 15 cm et une épaisseur de 2 mm.

La réfrigération directe de la structure produite a été assurée par passage de cette structure au travers d'une section de filière droite annulaire subséquente, également revêtue de résine fluorée TEFLON, d'une longueur de 10 cm maintenue à 80-90 °C.

La lubrification au niveau de la filière a été, en outre, assurée par injection d'un film d'une épaisseur de 1 à 10 microns d'huile de silicone.

Durant cet essai, qui a été réalisé sous une pression d'extrusion totale de 500 bars, on a constaté qu'une structure tubulaire a été produite de façon très stable et durable avec une vitesse de production de 50 cm/min.

Le tube ainsi obtenu présente un rapport diamètre externe/épaisseur de 75 et un module de traction, mesuré à 23 °C selon la norme ISO R 527, vitesse de traction 1 m/min, de 4300 MPa dans le sens longitudinal.

Exemple 2

On a préalablement mélangé dans une extrudeuse CLEXTRAL à double vis corotatives de 45 mm, la température matière à la sortie de cette extrudeuse valant 250 °C et le débit étant de 30 kg/h :

- 87 % en volume de polyéthylène de haute densité identique à celui mis en oeuvre selon l'exemple 1R;
- 13 % en volume, soit environ 20 % en poids, de mica ayant une masse spécifique de 2,8 $g/cm^3$, un module de traction de 170 GPa dans le plan des plaquettes, une largeur de plaquettes supérieure à cinq fois leur épaisseur et ayant une granulométrie telle que 100 % passe au travers du tamis de maille de 150 $\mu$m et 45 % en poids au tamis de 50 $\mu$m.

Les conditions d'extrusion étaient semblables à celles selon l'exemple 1R, à l'exception de la pression d'extrusion totale, qui s'élevait à 560 bars.

Le tube biorienté ainsi obtenu présentait un module de traction longitudinal de 7000 MPa.

Le facteur R, calculé en prenant comme module de traction du polyéthylène la valeur de 4300 MPa obtenue dans des conditions analogues mais en l'absence de mica, selon l'exemple 1R, vaut 0,15.

Exemple 3R

On a pressé, à 200 °C et sous une pression de 50 bars, du polyéthylène identique à celui selon l'exemple 1R, pour obtenir une plaque d'une épaisseur de 2 mm, d'une largeur de 10 cm et d'une longueur de 20 cm.

Le module de traction (substantiellement isotrope dans le plan de l'échantillon) de la plaque était de 1100 MPa.

Exemple 4R

On a procédé de la même manière que selon l'exemple 3R, mais à partir d'une composition de polyéthylène et de mica identique à celle selon l'exemple 2.

Le module de traction de la plaque était de 3000 MPa.

Le facteur R, calculé en prenant comme module de traction du polyéthylène la valeur de 1100 MPa obtenue dans des conditions analogues mais en l'absence de mica, selon l'exemple 3R, vaut 0,092.

**Revendications**

1. Tube biorienté, essentiellement constitué d'une polyoléfine et d'au moins une matière de charge sous forme de plaquettes, dans lequel le rapport

$$R = \frac{E \text{ composition - E polyoléfine.} \,(1\text{-}\% \text{ volume charge})}{E \text{ charge. } \% \text{ volume charge}}$$

est au moins égal à 0,1,

E étant le module de traction mesuré selon la norme ISO R 527 à 23 °C.

2. Tube selon la revendication 1, caractérisé en outre en ce que la matière de charge sous forme de plaquettes est choisie parmi le talc et le mica.

3. Tube selon l'une quelconque des revendications précédentes, caractérisé en outre en ce que la matière de charge sous forme de plaquettes est présente à raison de 1 à 80 % en poids par rapport au poids total de composition mise en oeuvre.

4. Tube selon l'une quelconque des revendications précédentes, caractérisé en outre en ce que la polyoléfine est un polymère dérivé de l'éthylène.

5. Tube selon l'une quelconque des revendications 1 à 3, caractérisé en outre en ce que la polyoléfine est un polymère dérivé du propylène.

6. Tube selon l'une quelconque des revendications précédentes, caractérisé en outre en ce que la polyoléfine a un indice de fluidité sous 21,6 kg inférieur à 10 selon la norme ASTM D 1238 (g/10 min).

7. Tube selon l'une quelconque des revendications précédentes, caractérisé en outre en ce que la polyoléfine présente une distribution de poids moléculaires telle que le rapport entre son poids moléculaire moyen en poids et son poids moléculaire moyen en nombre soit au moins égal à 10.

8. Plaque biorientée obtenue à partir d'un tube biorienté selon l'une quelconque des revendications précédentes.

9. Article biorienté obtenu à partir d'un tube biorienté ou d'une plaque biorientée selon l'une quelconque des revendications précédentes.

Office européen
des brevets

**RAPPORT DE RECHERCHE EUROPEENNE**

Numero de la demande
EP 95 20 3257

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO-A-80 00550 (BETHLEHEM STEEL) <br> * page 26, ligne 8 - ligne 19 * <br> * revendications 48,50,53,55; exemple VII * | 1-9 | C08K3/34 |
| X | GB-A-1 044 503 (W.R.GRACE) <br> * page 1, colonne 2, ligne 46 - page 2, colonne 1, ligne 42 * <br> * page 2, colonne 2, ligne 71 - ligne 89 * <br> * page 2, colonne 2, ligne 97 - ligne 103 * | 1-9 | |
| X | EP-A-0 157 601 (NATIONAL RESEARCH DEVELOPMENT) <br> * page 2, ligne 22 - ligne 33 * <br> * page 4, ligne 1 - ligne 9 * | 1-9 | |
| T | EP-A-0 627 589 (SOLVAY) <br> * page 4, ligne 1 - ligne 8 * | 1-9 | |
| | | | **DOMAINES TECHNIQUES RECHERCHES (Int.Cl.6)** |
| | | | C08K |

Le présent rapport a été établi pour toutes les revendications

| Lieu de la recherche | Date d'achèvement de la recherche | Examinateur |
|---|---|---|
| LA HAYE | 14 Mars 1996 | Schmidt, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)